# EUROPEAN PATENT APPLICATION

(11) **EP 2 759 854 A1**
(43) Date of publication of application: **30.07.2014**
(21) Application number: 12833192.3
(22) Date of filing: 20.09.2012
(51) Int. Cl.: G02B 5/26, C09D 5/33, C09D 7/12, C09D 201/00, C09J 7/02, C09J 11/04, C09J 201/00, G02B 5/22

(54) **HEAT RAY SHIELDING MATERIAL**

(30) Priority: 20.09.2011 JP 2011204199
(71) Applicant: Fujifilm Corporation, Minato-ku Tokyo 106-0031 (JP)
(72) Inventor: OHZEKI Katsuhisa, Ashigarakami-gun Kanagawa 258-8577 (JP); MATSUNO Ryou, Ashigarakami-gun Kanagawa 258-8577 (JP)
(74) Representative: HOFFMANN EITLE
(86) International application number: PCT/JP2012/074038
(87) International publication number: WO 2013/042718

(57) **Abstract**

A heat ray shielding material having a metal particles-containing layer that contains at least one type of metal particles, in which the thickness of the metal particles-containing layer is from 10 nm to 80 nm, the metal particles contain tabular metal particles having a hexagonal to circular form in a ratio of at least 60% by number, and the mean thickness of the hexagonal to circular, tabular metal particles is at most 14 nm has good visible light transmittance, heat shieldability (solar reflectance), surface profile and rubbing resistance.

## Description

### Technical Field

The present invention relates to a heat ray shielding material having good visible light transmittance, heat shieldability and rubbing resistance.

### Background Art

In recent years, as one of energy saving measures for reducing carbon dioxide, heat ray shieldability-imparting materials have been developed for windows of vehicles and buildings. From the viewpoint of heat ray shieldability (solar radiation heat acquisition rate), desired are heat reflective types with no reradiation rather than heat absorptive types with indoor reradiation of absorbed light (in an amount of about 1/3 of the absorbed solar energy), for which various proposals have been made.

As an IR shielding filter, proposed is a filter using Ag tabular particles (see Patent Literature 1). However, since the IR shielding filer described in Patent Literature 1 is intended to be used in plasma display panels (PDP) and since such Ag tabular particles are not given configuration control, the filter mainly functions as an IR light absorbent in an IR region and could not function as a material that proactively reflects heat rays. Consequently, when the IR shielding filter comprising such Ag tabular particles is used for shielding from direct sunlight, then the IR absorbent filter itself would be warmed to elevate the ambient temperature owing to the heat thereof and therefore its function as an IR shielding material is insufficient. In Examples in Patent Literature 1, a dispersion containing Ag tabular particles is applied onto glass and dried thereon to provide an IR shielding filter; however, the reference says that the thickness of the dried film is 1 µm, or that is, 1000 nm.

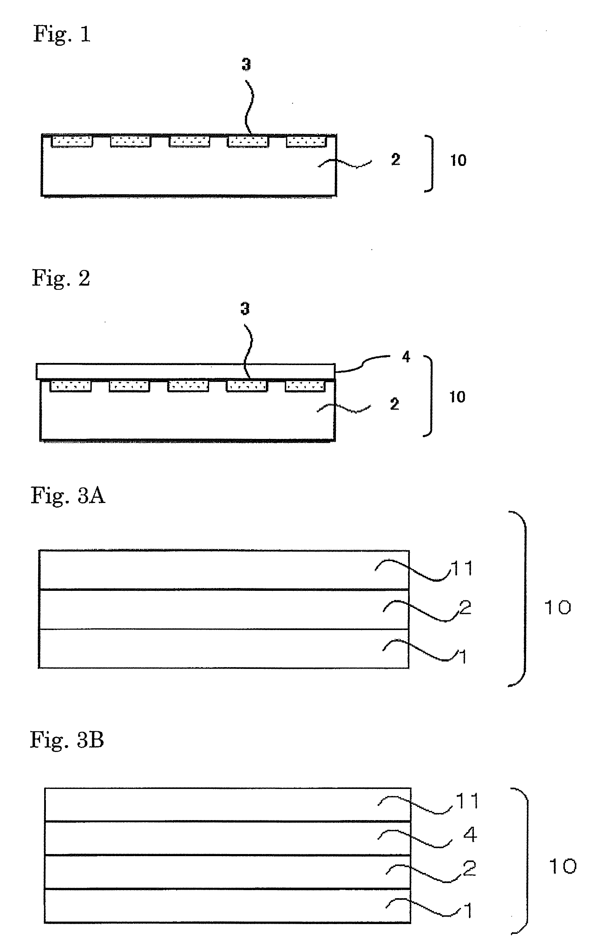

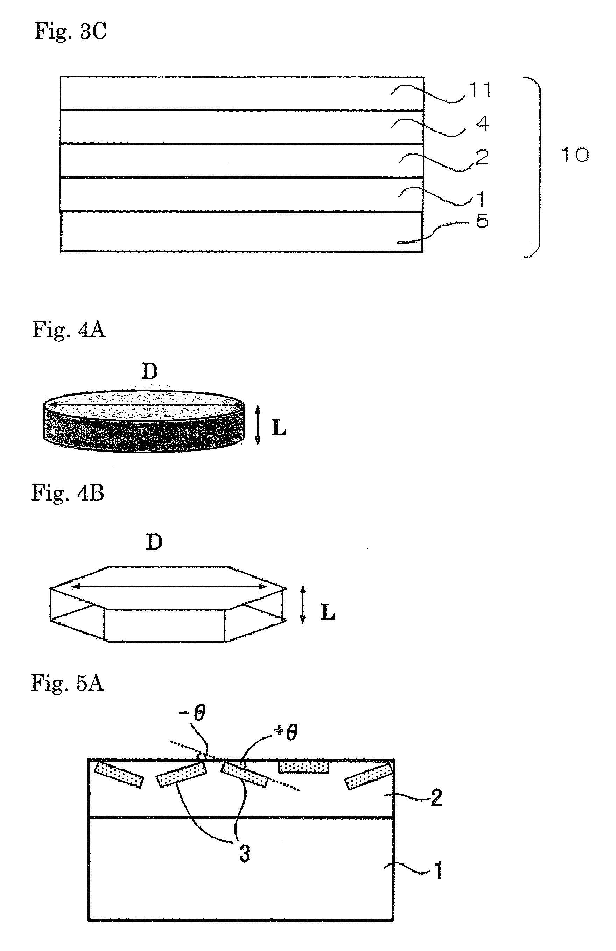

Patent Literature 2 describes a wavelength-selective film using granular silver. In Patent Literature 2, the Ag layer in which granular silver particles are distributed is formed through Ag sputtering and heat treatment; and as in Fig. 3 in the reference, many granular silver particles have an atypical form. In addition, in Examples in Patent Literature 2, the thickness of the Ag layer formed has a thickness of 5 mm, but nothing is described relating to the relationship between the thickness of the silver particles and the thickness of the Ag layer.

Patent Literature 3 describes a solar shielding film which has a near-IR shielding function-imparted hard coat layer provided between an adhesive layer and a substrate. Patent Literature 3 describes only an embodiment of using a near-IR absorbent material for imparting a near-IR shielding function to the hard coat layer, which, however, could not function as a material that proactively reflects heat rays. Consequently, when such an IR shielding filter comprising Ag tabular particles is used for shielding from direct sunlight, then the IR absorbent filter itself would be warmed to elevate the ambient temperature owing to the heat thereof and therefore its function as an IR shielding material is insufficient. In addition, Patent Literature 3 discloses an organic near-IR absorbent and an inorganic near-IR absorbent as the near-IR absorbent material, or that is, the reference describes an embodiment of using metal particles, but does not have any description relating to the shape and the thickness of the metal particles. Further, the reference says that the thickness of the hard coat layer is generally from 1 to 10 µm, or that is, from 1000 to 10000 nm.

On the other hand, Patent Literature 4 discloses a heat ray shielding material which has tabular metal particles having a hexagonal to circular form in a ratio of at least 60% by number and in which the main plane of the hexagonal to circular, tabular metal particles is plane-oriented in a range of from 0° to ±30° on average relative to one surface of the metal particles-containing layer. Patent Literature 4 does not describe a preferred range of the thickness of the metal particles-containing layer, and in Examples therein, disclosed is an embodiment where the metal particles-containing layer is from 0.1 to 0.5 µm, or that is, from 100 to 500 nm.

### Citation List

### Patent Literature

Patent Literature 1: JP-A 2007-178915
Patent Literature 2: Japanese Patent 3454422
Patent Literature 3: JP-A 2008-248131
Patent Literature 4: JP-A 2011-118347

### Summary of Invention

### Technical Problem

Investigations made by the present inventors have revealed a problem that the IR shielding filter described in Patent Literature 1 and the solar reflection film described in Patent Literature 3 are of an IR absorption type, and therefore when they are used for shielding from the heat of sunlight, the IR absorbent itself is warmed to increase the ambient temperature. In addition, when they are stuck to windowpanes, then there occurs another problem that the glass is broken (heat crack) because of the reason that the temperature increase differs between the part on which sunlight shines and the part on which sunlight does no shine.

In Patent Literature 2, when IR rays are shielded by granular silver, then it is impossible to sharply shield from IR rays since the half-value width of the spectrum is large, or that is, there is a problem in that the film could not fully shield from IR rays on a shortwave side having much sunlight energy.

The heat ray shielding material described in Patent Literature 4 can reflect IR rays and is advantageous as an IR shielding film. However, the present inventors investigated the invention described in Patent Literature 4 and have found that cissing-shaped point defects having a size (i.e., a diameter) of 0.1 mm or more exist. Further, in the invention described in Patent Literature 4, when the thickness of the silver-containing layer is reduced for preventing the above-mentioned point defects, then there occurs a problem that the tabular metal particles readily peel away when the metal particles-containing layer is rubbed.

The present invention is to solve the above-mentioned problems. Specifically, the technical problem to which the present invention is directed is to provide a heat ray shielding material having good visible light transmittance, heat shieldability (solar reflectance), surface profile and rubbing resistance.

### Solution to Problem

The present inventors have made assiduous investigations for solving the above-mentioned problems and, as a result, have found that when the shape of the tabular metal particles is too much at random, then the heat ray shieldability worsens. In addition, the inventors have further found that, when the thickness of the metal particles-containing layer is reduced for increasing the heat ray shieldability in the constitution of Patent Literature 4, then the tabular metal particles would peel away or the configuration thereof would be disordered owing to the problem of rubbing resistance as described above, and therefore a stable heat ray shielding function could not be obtained.

Given that situation, the inventors tried reducing the thickness of the metal particles-containing layer in the constitution of Patent Literature 4 and simultaneously further reducing the thickness of the tabular particles having a specific shape in the tabular metal particles-containing layer, and have succeeded in providing here a heat ray shielding material having good visible light transmittance, heat shieldability (solar reflectance), surface profile and rubbing resistance.

The present invention is based on the above-mentioned findings made by the inventors, and the means thereof for solving the above-mentioned problems are as follows:
[1] A heat ray shielding material having a metal particles-containing layer that contains at least one type of metal particles, in which the thickness of the metal particles-containing layer is from 10 nm to 80 nm, the metal particles contain tabular metal particles having a hexagonal to circular form in a ratio of at least 60% by number relative to the total number of the metal particles, and the mean thickness of the hexagonal to circular, tabular metal particles is at most 14 nm.
[2] Preferably, in the heat ray shielding material according to [1], the coefficient of variation of the mean circle-equivalent diameter is at most 30%.
[3] Preferably, in the heat ray shielding material according to [1] or [2], the mean circle-equivalent diameter is from 70 nm to 500 nm and the aspect ratio (mean particle diameter/mean particle thickness) is from 6 to 40.
[4] Preferably, in the heat ray shielding material according to any one of [1] to [3], the hexagonal to circular, tabular metal particles contain at least silver.
[5] Preferably, in the heat ray shielding material according to any one of [1] to [4], the main plane of the hexagonal to circular, tabular metal particles is plane-oriented in a range of from 0° to ±30° on average relative to one surface of the metal particles-containing layer.
[6] Preferably, in the heat ray shielding material according to any one of [1] to [5], the metal particles-containing layer contains a polymer.
[7] Preferably, in the heat ray shielding material according to [6], the main polymer of the polymer contained in the metal-containing layer is a polyester resin.
[8] Preferably, the heat ray shielding material according to any one of [1] to [7] has a layer containing a UV absorbent.
[9] Preferably, the heat ray shielding material according to [8] has an adhesive layer, in which the adhesive layer or the layer between the adhesive layer and the metal particles-containing layer contains the UV absorbent.
[10] Preferably, the heat ray shielding material according to any one of [1] to [9] has a visible light transmittance of at least 70%.
[11] Preferably, the heat ray shielding material according to any one of [1] to [10] reflects IR rays. Advantageous Effects of Invention

According to the invention, there is provided a heat ray shielding material having good visible light transmittance, heat shieldability (solar reflectance), surface profile and rubbing resistance.

### Brief Description of Drawings

[Fig. 1] Fig. 1 is a schematic view showing one example of the heat ray shielding material of the invention.
[Fig. 2] Fig. 2 is a schematic view showing another example of the heat ray shielding material of the invention.
[Fig. 3A] Fig. 3A is a schematic view showing another example of the heat ray shielding material of the invention.
[Fig. 3B] Fig. 3B is a schematic view showing another example of the heat ray shielding material of the invention.
[Fig. 3C] Fig. 3C is a schematic view showing another example of the heat ray shielding material of the invention.
[Fig. 4A] Fig. 4A is a schematic perspective view showing one example of the shape of a tabular particle contained in the heat ray shielding material of the invention, and shows a circular tabular metal particle.
[Fig. 4B] Fig. 4B is a schematic perspective view showing one example of the shape of a tabular particle contained in the heat ray shielding material of the invention, and shows a hexagonal tabular metal particle.
[Fig. 5A] Fig. 5A is a schematic cross-sectional view showing the existence condition of a metal particles-containing layer that contains tabular metal particles in the heat ray shielding material of the invention, and explains the angle (θ) between the metal particles-containing layer that contains tabular metal particles (which is parallel to the plane of the substrate) and the main plane (that determines the circle-equivalent diameter D) of the tabular metal particles.
[Fig. 5B] Fig. 5B is a schematic cross-sectional view showing the existence condition of a metal particles-containing layer that contains tabular metal particles in the heat ray shielding material of the invention, and shows the existence region of the tabular metal particles in the depth direction of the heat ray shielding material in the metal particles-containing layer.
[Fig. 5C] Fig. 5C is a schematic cross-sectional view showing one example of the existence condition of a metal particles-containing layer that contains tabular metal particles in the heat ray shielding material of the invention.
[Fig. 5D] Fig. 5D is a schematic cross-sectional view showing another example of the existence condition of a metal particles-containing layer that contains tabular metal particles in the heat ray shielding material of the invention.
[Fig. 5E] Fig. 5E is a schematic cross-sectional view showing another example of the existence condition of a metal particles-containing layer that contains tabular metal particles in the heat ray shielding material of the invention.

### Description of Embodiments

The heat ray shielding material of the invention is described in detail hereinunder.

The description of the constitutive elements of the invention given hereinunder may be for some typical embodiments of the invention, to which, however, the invention should not be limited. In this description, the numerical range expressed by the wording "a number to another number" means the range that falls between the former number indicating the lower limit of the range and the latter number indicating the upper limit thereof.

### (Heat Ray Shielding Material)

The heat ray shielding material of the invention has a metal particles-containing layer that contains at least one type of metal particles, in which the thickness of the metal particles-containing layer is from 10 nm to 80 nm, the metal particles contain tabular metal particles having a hexagonal to circular form in a ratio of at least 60% by number relative to the total number of the metal particles, and the mean thickness of the hexagonal to circular, tabular metal particles is at most 14 nm.

In one preferred embodiment thereof, the heat ray shielding material of the invention has a metal particles-containing layer that contains at least one type of metal particles, and optionally has any other layer such as an adhesive layer, a UV absorbent layer, a substrate layer, a metal oxide particles-containing layer, etc.

Regarding the layer configuration of the heat ray shielding material, there is mentioned an embodiment where the heat ray shielding material 10 has, as shown in Fig. 1, a metal particles-containing layer 2 that contains at least one type of metal particles and where tabular metal particles 3 are eccentrically located in the surface of the layer. Also mentioned is an embodiment as shown in Fig. 2, where the material has a metal particles-containing layer 2 and an overcoat layer 4 on the metal particles-containing layer and where tabular metal particles 3 are eccentrically located in the surface of the metal particles-containing layer.

In addition, favorably mentioned is an embodiment as shown in Fig. 3A, where the material has a substrate 1, a metal particles-containing layer 2 on the substrate and an adhesive layer 11 on the metal particles-containing layer.

Also favorably mentioned is an embodiment as shown in Fig. 3B, where the material has a substrate 1, a metal particles-containing layer 2 on the substrate, an overcoat layer 4 on the metal particles-containing layer, and an adhesive layer 11 on the overcoat layer. In the heat ray shielding material of the invention shown in Fig. 3A or 3B, preferably, the overcoat layer 4 or the adhesive layer 11 contains a UV absorbent.

Also favorably mentioned is an embodiment as shown in Fig. 3C, where the material has a hard coat layer 5 on the side opposite to the side having the metal particles-containing layer 2 of the substrate 1.

### <1. Metal Particles-Containing Layer>

The metal particles-containing layer is a layer that contains at least one type of metal particles, and may be suitably selected in accordance with the intended object thereof with no limitation, so far as the metal particles therein contain hexagonal to circular, tabular metal particles in a ratio of at least 60% by number relative to the total number of the metal particles and the mean thickness of the hexagonal to circular, tabular metal particles is at most 14 nm.

When the thickness of the metal particles-containing layer is referred to as d, it is desirable that at least 80% by number of the hexagonal to circular, tabular metal particles exist in the range of from the surface of the metal particles-containing layer to the depth of d/2 thereof, more preferably in the range of from the surface of the metal particles-containing layer to the depth of d/3 thereof. Not adhering to any theory, the heat ray shielding material of the invention is not limited to one produced according to the production method mentioned below; however, the tabular metal particles may be eccentrically located in one surface of the metal particles-containing layer by adding a specific polymer (preferably a latex) thereto in forming the metal particles-containing layer.

### - 1-1. Metal Particles -

Not specifically defined, the metal particles may be suitably selected in accordance with the intended object thereof so far as they contain hexagonal to circular, tabular metal particles in a ratio of at least 60% by number relative to the total number of the metal particles, in which the mean thickness of the hexagonal to circular, tabular metal particles is at most 14 nm.

Regarding the existence form of the hexagonal to circular, tabular metal particles in the metal particles-containing layer, it is desirable that the tabular metal particles are plane-oriented in a range of from 0° to ±30° on average relative to one surface of the metal particles-containing layer (in case where the heat ray shielding material of the invention has a substrate, relative to the surface of the substrate).

Preferably, one surface of the metal particles-containing layer is a flat surface. In case where the metal particles-containing layer of the heat ray shielding material of the invention has a substrate serving as a temporary support, it is desirable that both the surface of the metal particles-containing layer and the surface of the substrate are nearly horizontal surfaces. Here, the heat ray shielding material may have or may not have the temporary support.

Not specifically defined, the size of the metal particles may be suitably selected in accordance with the intended object thereof. For example, the particles may have a mean particle diameter of at most 500 nm.

Also not specifically defined, the material of the metal particles may be suitably selected in accordance with the intended object thereof. From the viewpoint that the heat ray (near-IR ray) reflectance thereof is high, preferred are silver, gold, aluminium, copper, rhodium, nickel, platinum, etc.

### - 1-2. Tabular Metal Particles -

Not specifically defined, the tabular metal particles may be suitably selected in accordance with the intended object thereof so far as they are particles each comprising two main planes (see Fig. 4A and Fig. 4B). For example, there are mentioned hexagonal, circular, triangular forms, etc. Of those, more preferred are hexagonal or more polygonal to circular forms from the viewpoint of high visible light transmittance thereof. More preferred is a hexagonal or circular form.

In this description, the circular form means such a form that, in the metal tabular particles to be mentioned below (the meaning thereof is the same as the meaning of tabular metal particles), when the surface roughness of at most 10% of the mean circle-equivalent diameter of the particles is ignored, the number of the sides thereof having a length of at most 50% of the mean circle-equivalent diameter is 0 (zero) per one tabular metal particle. The circular tabular metal particles are not specifically defined and may be suitably selected in accordance with the intended object thereof, so far as the particles have, when they are observed from the top of the main plane thereof with a transmission electronic microscope (TEM), no angle but have a roundish form.

In this description, the hexagonal form means such a form that, when the surface roughness of at most 10% of the mean circle-equivalent diameter of the tabular metal particles to be mentioned below is ignored, the number of the sides thereof having a length of at most 20% of the mean circle-equivalent diameter is 6 per one tabular metal particle. The same shall apply to the other polygonal forms. The hexagonal tabular metal particles are not specifically defined and may be suitably selected in accordance with the intended object thereof, so far as the particles have, when they are observed from the top of the main plane thereof with a transmission electronic microscope (TEM), have a hexagonal form. For example, the angle of the hexagonal form of the particles may be an acute angle or a blunt angle. However, from the viewpoint of the ability of the particles to reduce visible light absorption, the angle is preferably a blunt angle. The degree of the bluntness of the angle is not specifically defined and may be suitably selected in accordance with the intended object thereof.

Not specifically defined, the tabular metal particles may be the same as that of the above-mentioned metal particles and may be suitably selected in accordance with the intended object thereof. Preferably, the tabular metal particles contain at least silver.

Of the metal particles existing in the metal particles-containing layer, the ratio of the hexagonal to circular, tabular metal particles is at least 60% by number to the total number of the metal particles, preferably at least 65% by number, more preferably at least 70% by number. When the ratio of the tabular metal particles is less than 60% by number, then the visible light transmittance of the layer would lower.

### [1-2-1. Plane Orientation]

Preferably, in the heat ray shielding material of the invention, the main plane of the hexagonal to circular, tabular metal particles is plane-oriented in a range of from 0° to ±30° on average relative to one surface of the metal particles-containing layer (in case where the heat ray shielding material has a substrate, relative to the surface of the substrate), more preferably in a range of from 0° to ±20° on average, even more preferably in a range of from 0° to ±5° on average.

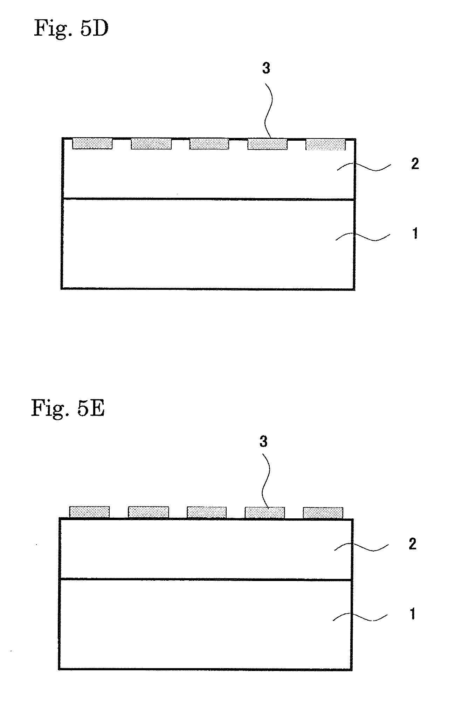

Not specifically defined, the existence condition of the tabular metal particles may be suitably selected in accordance with the intended object thereof, but preferably, the particles are aligned as in Fig. 5D or Fig. 5E to be mentioned hereinunder.

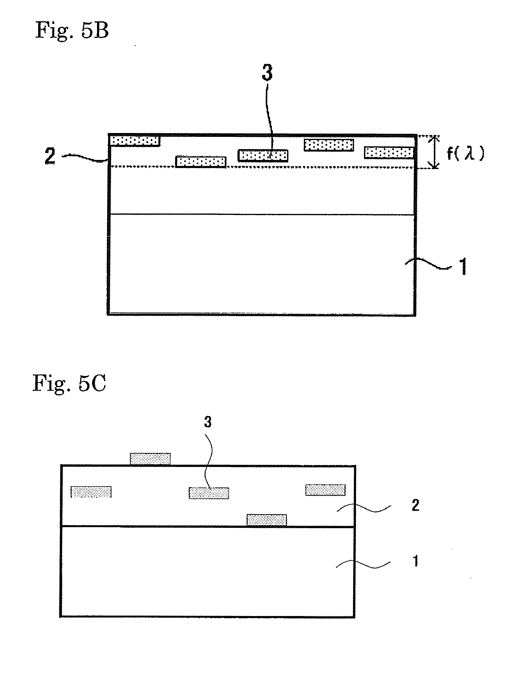

Here, Fig. 5A to Fig. 5E each are a schematic cross-sectional view showing the existence condition of the metal particles-containing layer that contains tabular metal particles in the heat ray shielding material of the invention. Fig. 5C, Fig. 5D and Fig. 5E each show the existence condition of the tabular metal particles 3 in the metal particles-containing layer 2. Fig. 5A is a view explaining the angle (±θ) between the plane of the substrate 1 and the main plane (that determines the circle-equivalent diameter D) of the tabular metal particle 3. Fig. 5B shows the existence region in the depth direction of the heat ray shielding material of the metal particles-containing layer 2.

In Fig. 5A, the angle (±θ) between the surface of the substrate 1 and the main plane or the extended line of the main plane of the tabular metal particle 3 corresponds to the predetermined range in the above-mentioned plane orientation. Specifically, the plane orientation means that the inclined angle (±θ) shown in Fig. 5A is small when the cross section of the heat ray shielding material is observed, and in particular as in Fig. 5D, means that the surface of the substrate 1 is kept in contact with the main plane of the tabular metal particles 3, or that is, θ is 0°. When the angle of the plane orientation of the main plane of the tabular metal particle 3 relative to the surface of the substrate 1, or that is, θ shown in Fig. 5A is more than ±30°, then the reflectance at a predetermined wavelength (for example, from the visible wavelength side to the near-IR region) of the heat ray shielding material may lower.

Not specifically defined, the mode of evaluation of whether or not the main plane of the tabular metal particle is in plane orientation relative to one surface of the metal particles-containing layer (in case where the heat ray shielding material has a substrate, the surface of the substrate) may be suitably selected in accordance with the object thereof. For example, in one evaluation method employable here, a suitable cross-sectional slice of the heat ray shielding material is prepared, and the metal particles-containing layer (in case where the heat ray shielding material has a substrate, the substrate) and the tabular metal particles in the slice are observed and evaluated. Concretely, the heat ray shielding material is cut with a microtome or through focused ion beam technology (FIB) to prepare a cross-sectional sample or a cross-sectional slice sample, and this is observed with various types of microscopes (for example, field emission scanning electron microscope (FE-SEM) or the like, and the resulting image is analyzed for the intended evaluation.

In the heat ray shielding material, in case where the binder to cover the tabular metal particles swells in water, then the sample thereof that has been frozen with liquid nitrogen may be cut with a diamond cutter mounted on a microtome to give the cross-sectional sample or the cross-sectional slice sample. On the other hand, in case where the binder to cover the tabular metal particles in the heat ray shielding material does not swell in water, the intended cross-sectional sample or cross-sectional slice sample may be directly prepared from the material.

Not specifically defined, the cross-sectional sample or the cross-sectional slice sample prepared in the manner as above may be observed in any manner suitably selected in accordance with the intended object thereof so far as in the sample, it is possible to confirm whether or not the main plane of the tabular metal particles could be in plane orientation relative to one surface of the metal particles-containing layer (in case where the heat ray shielding material has a substrate, the surface of the substrate). For example, there are mentioned observation with FE-SEM, TEM, optical microscope, etc. The cross-sectional sample may be observed with FE-SEM, and the cross-sectional slice sample may be observed with TEM. In evaluation with FE-SEM, it is desirable that the microscope has a spatial resolving power capable of clearly determining the form of the tabular metal particles and the tilt angle (±θ in Fig. 5A) thereof.

### [1-2-2. Mean Particle Diameter (mean circle-equivalent diameter) and Particle Diameter Distribution of Mean Particle Diameter (mean circle-equivalent diameter)]

Not specifically defined, the mean particle diameter (mean circle-equivalent diameter) of the tabular metal particles may be suitably selected in accordance with the intended object thereof. Preferably, the mean particle diameter is from 70 nm to 500 nm, more preferably from 100 nm to 400 nm. When the mean particle diameter (mean circle-equivalent diameter) is less than 70 nm, then the contribution of absorption by the tabular metal particles would be larger than that of reflection by the particles and therefore, the material could not secure sufficient heat ray reflectance; but when more than 500 nm, then the haze (scattering) would increase so that the transparency of the substrate would be thereby lowered.

The mean particle diameter (mean circle-equivalent diameter) means the mean value of the data of the main plane diameter (maximum length) of 200 tabular particles that are randomly selected on the image taken in observation of the image with TEM.

The metal particles-containing layer may contain two or more different types of metal particles that differ in the mean particle diameter (mean circle-equivalent diameter) thereof; and in such a case, the metal particles may have two or more peaks of the mean particle diameter (mean circle-equivalent diameter) thereof, or that is, the metal particles may have two or more mean particle diameters (mean circle-equivalent diameters).

In the heat ray shielding material of the invention, preferably, the coefficient of variation of the particle size distribution of the tabular metal particles is at most 30%, more preferably at most 20%. When the coefficient of variation is more than 30%, then the heat ray reflection wavelength range of the heat ray shielding material may broaden.

Here, the coefficient of variation of the particle size distribution of the tabular metal particles is a value (%) calculated, for example, as follows: The distribution range of the particle diameter of 200 tabular metal particles that have been employed for calculation of the mean value as described above is plotted to determine the standard deviation of the particle size distribution, and this is divided by the mean value of the main plane diameter (maximum length) obtained as above (mean particle diameter (mean circle-equivalent diameter)) to give the intended value (%).

### [1-2-3. Thickness, Aspect Ratio of Tabular Metal Particles]

In the heat ray shielding material of the invention, the thickness of the tabular metal particles is at most 14 nm, preferably from 5 to 14 nm.

Not specifically defined, the aspect ratio of the tabular metal particles may be suitably selected in accordance with the intended object thereof, and is preferably from 6 to 40, more preferably from 10 to 35 from the viewpoint that the reflectance of the particles in an IR region of from a wavelength 800 nm to a wavelength 1,800 nm could be high. When the aspect ratio is less than 8, then the reflection wavelength would be shorter than 800 nm; and when more than 40, then the reflection wavelength would be longer than 1,800 nm and the material could not secure a sufficient heat ray reflective power.

The aspect ratio means a value calculated by dividing the mean particle diameter (mean circle-equivalent diameter of the tabular metal particles by the mean particle thickness of the tabular metal particles. The mean particle thickness corresponds to the distance between the main planes of the tabular metal particles; and for example, as shown in Fig. 4A and Fig. 4B, the mean particle thickness may be measured with an atomic force microscope (AFM).

Not specifically defined, the method of measuring the mean particle thickness with AFM may be suitably selected in accordance with the intended object thereof. For example, there is mentioned a method where a dispersion of particles that contains tabular metal particles is dropped onto a glass substrate and dried thereon, and the thickness of one particle is measured.

### [1-2-4. Existence Region of Tabular Metal Particles]

In the heat ray shielding material of the invention, the thickness of the existence region of the tabular metal particles is preferably from 5 to 60 nm, more preferably from 11 to 60 nm, even more preferably from 20 to 60 nm.

Preferably in the heat ray shielding material of the invention, at least 80% by number of the hexagonal to circular, tabular metal particles exist in the range of from the surface to d/2, of the metal particles-containing layer, more preferably in the range to d/3; and even more preferably, at least 60% by number of the hexagonal to circular, tabular metal particles are exposed out of one surface of the metal particles-containing layer. The tabular metal particles existing in the range of from the surface to d/2, of the metal particles-containing layer means that at least a part of the tabular metal particles are contained in the range of from the surface to d/2, of the metal particles-containing layer. In other words, the tabular metal particles that partly protrude out of the surface of the metal particles-containing layer, as in Fig. 5E, are also in the scope of the concept of the tabular metal particles existing in the range of from the surface to d/2, of the metal particles-containing layer. Fig. 5E means that only a part of each tabular metal particle is buried in the metal particles-containing layer in the thickness direction thereof but does not mean that each tabular metal particle is laid on the surface of the metal particles-containing layer.

The tabular metal particles that are exposed out of one surface of the metal particles-containing layer mean that a part of one surface of the tabular metal particle protrudes out of the surface of the metal particles-containing layer.

Here, the existence distribution of the tabular metal particles in the metal particles-containing layer may be determined, for example, on the image taken through SEM observation of a cross-sectional sample of the heat ray shielding material.

In the heat ray shielding material of the invention, it is desirable that the metal particles-containing layer 2 exists in the range of (λ/n)/4 in the depth direction from the horizontal surface of the heat ray shielding material as in Fig. 5B, where the plasmon resonance wavelength of the metal that constitutes the tabular metal particles 3 in the metal particles-containing layer is referred to as λ and the refractive index of the medium in the metal particles-containing layer 2 is referred to as n. Within the range, the effect of strengthening the amplitude of the reflected wave owing to the phase of the reflected wave in the upper and lower interfaces of the metal particles-containing layer of the heat ray shielding material could be sufficiently high, and therefore the visible light transmittance and the maximum heat ray reflectance of the material could be thereby bettered.

Not specifically defined, the plasmon resonance wavelength λ of the metal that constitutes the tabular metal particles in the metal particles-containing layer may be suitably selected in accordance with the intended object thereof, but from the viewpoint of imparting heat ray reflection performance to the layer, the wavelength is preferably from 400 nm to 2,500 nm, and from the viewpoint of imparting visible light transmittance thereto, the wavelength is more preferably from 700 nm to 2,500 nm.

### [1-2-5. Medium in Metal Particles-Containing Layer]

Not specifically defined, the medium in the metal particles-containing layer may be suitably selected in accordance with the intended object thereof. Preferably, in the heat ray shielding material of the invention, the metal-containing layer contains a polymer, more preferably a transparent polymer. The polymer includes various high-molecular substances, for example, polyvinyl acetal resin, polyvinyl alcohol resin, polyvinyl butyral resin, polyacrylate resin, polymethyl methacrylate resin, polycarbonate resin, polyvinyl chloride resin, (saturated) polyester resin, polyurethane resin, natural polymers such as gelatin, cellulose, etc. Of those, in the invention, it is desirable that the main polymer of the polymer is a polyvinyl alcohol resin, a polyvinyl butyral resin, a polyvinyl chloride resin, a (saturated) polyester resin or a polyurethane resin. More preferred are a polyester resin and a polyurethane resin from the viewpoint that at least 80% by number of the hexagonal to circular, tabular metal particles could be readily made to exist in the range of from the surface to d/2, of the metal particles-containing layer; and even more preferred is a polyester resin from the viewpoint of improving the rubbing resistance of the heat ray shielding material of the invention.

Of the polyester resin, even more preferred is a saturated polyester resin not containing a double bond, from the viewpoint of the ability thereof to impart excellent weather resistance to the material. Also more preferably, the polymer has a hydroxyl group or a carboxyl group at the molecular terminal thereof, from the viewpoint that the polymer could be cured with a water-soluble/water-dispersible curing agent or the like to provide high hardness, durability and heat resistance.

As the polymer, preferably used are commercially-available ones, and for example, there is mentioned Plascoat Z-867 that is a water-soluble polyester resin manufactured by Goo Chemical.

In this description, the main polymer of the polymer contained in the metal-containing layer means the polymer component that accounts for at least 50% by mass of the polymer contained in the metal-containing layer.

Preferably, the content of the polyester resin relative to the metal particles contained in the metal particles-containing layer is from 1 to 10000% by mass, more preferably from 10 to 1000% by mass, even more preferably from 20 to 500% by mass. When the content of the binder contained in the metal particles-containing layer is defined to fall within the above range, then the physical properties such as the rubbing resistance of the layer could be improved.

The refractive index n of the medium is preferably from 1.4 to 1.7.

Preferably in the heat ray shielding material of the invention in which the thickness of the hexagonal to circular, tabular metal particles is referred to as a, at least 80% by number of the hexagonal to circular, tabular metal particles are covered with the polymer in the range of at least a/10 in the thickness direction thereof, more preferably covered with the polymer in the range of from a/10 to 10a in the thickness direction thereof, even more preferably covered with the polymer in the range of from a/8 to 4a. When at least a predetermined proportion of the hexagonal to circular, tabular metal particles are buried in the metal particles-containing layer in the manner as above, then the rubbing resistance of the layer could be further more enhanced. Specifically, of the heat ray shielding material of the invention, the embodiment of Fig. 5D is preferred to the embodiment of Fig. 5E.

### [1-2-6. Areal Ratio of Tabular Metal Particles]

The areal ratio [(B/A) x 100] that is the ratio of the total area B of the tabular metal particles to the area A of the substrate when the heat ray shielding material is seen from the top thereof (the total projected area A of the metal particles-containing layer when the metal particles-containing layer is seen in the vertical direction thereof) is preferably at least 15%, more preferably at least 20%. When the areal ratio is less than 15%, then the maximum heat ray reflectance of the material may lower and the material could not sufficiently secure the heat shielding effect thereof.

Here, the areal ratio may be determined, for example, by processing the image taken through SEM observation of the substrate of the heat ray shielding material from the top thereof or the image taken through AFM (atomic force microscope) observation thereof.

### [1-2-7. Mean Intergranular Distance of Tabular Metal Particles]

The mean intergranular distance of the tabular metal particles that are adjacent to each other in the horizontal direction in the metal particles-containing layer is preferably at least 1/10 of the mean particle diameter of the tabular metal particles from the viewpoint of the visible light transmittance and the maximum heat ray reflectance of the layer.

When the mean intergranular distance in the horizontal direction of the tabular metal particles is less than 1/10 of mean particle diameter of the tabular metal particles, then the maximum heat ray reflectance of the layer may lower. The mean intergranular distance in the horizontal direction is preferably at random from the viewpoint of the visible light transmittance of the layer. When the distance is not at random, or that is, when the distance is uniform, there may occur visible light absorption and the visible light transmittance may be thereby lowered.

Here, the mean intergranular distance in the horizontal direction of the tabular metal particles means a mean value of the intragranular distance data of two adjacent particles. The mean intergranular distance that is at random means that "when a SEM image containing at least 100 tabular metal particles is binarized to provide a two-dimensional autocorrelation of the brightness value, then the result does not have any other significant maximum point than the point of origin".

### [1-2-8. Layer Configuration of Metal Particles-Containing Layer]

In the heat ray shielding material of the invention, the tabular metal particles are arranged in the form of the metal particles-containing layer that contains the tabular metal particles, as in Fig. 5A to Fig. 5E.

The metal particles-containing layer may be composed of a single layer as in Fig. 5A to Fig. 5E, or may be composed of multiple metal particles-containing layers. In case where the metal particles-containing layer is composed of multiple layers, it may be given any desired heat shieldability in accordance with the wavelength range in which the heat shieldability is desired to be given to the layer. In case where the metal particles-containing layer is composed of multiple layers, it is necessary that, at least in the outermost metal particles-containing layer in the heat ray shielding material of the invention, at least 80% by number of the hexagonal to circular, tabular metal particles exist in the range of from the surface to d'/2, of the outermost metal particles-containing layer, in which d' indicates the thickness of the outermost metal particles-containing layer.

### [1-2-9. Thickness of Metal Particles-Containing Layer]

In the heat ray shielding material of the invention, the thickness of the metal particles-containing layer is from 10 to 80 nm. More preferably, the thickness of the metal particles-containing layer is from 20 to 80 nm, even more preferably from 30 to 50 nm. The thickness d of the metal particles-containing layer is preferably from a to 10a, more preferably from 2a to 8a, even more preferably from 1a to 5a, in which a indicates the thickness of the hexagonal to circular, tabular metal particles.

Here, the thickness of each metal particles-containing layer may be determined, for example, on the image taken through SEM observation of a cross-sectional sample of the heat ray shielding material.

In case where any other layer, for example, an overcoat layer to be mentioned below is arranged on the metal particles-containing layer of the heat ray shielding material, the boundary between the other layer and the metal particles-containing layer may be determined in the same manner as above, and the thickness d of the metal particles-containing layer may also be determined in the same manner as above. In case where the same type of polymer as that of the polymer contained in the metal particles-containing layer is used to form a coating film on the metal particles-containing layer, in general, the boundary between the metal particles-containing layer and the coating film could be determined on the image taken through SEM observation, and the thickness d of the metal particles-containing layer could be thereby determined.

### [1-2-10. Method for Synthesis of Tabular Metal Particles]

Not specifically defined, the method for synthesizing the tabular metal particles may be suitably selected in accordance with the intended object thereof so far as the intended hexagonal to circular, tabular metal particles could be synthesized in the method. For example, there is mentioned a liquid-phase method such as a chemical reduction method, an optochemical reduction method, an electrochemical reduction method or the like. Of those, especially preferred is a liquid-phase method such as a chemical reduction method, an optochemical reduction method or the like, from the viewpoint of the form and size controllability thereof. After hexagonal to triangular, tabular metal particles have been synthesized, the particles may be etched with a dissolution species capable of dissolving silver, such as nitric acid, sodium nitrite or the like, then aged by heating or the like to thereby blunt the corners of the hexagonal to triangular, tabular metal particles to give the intended hexagonal to circular, tabular metal particles.

Regarding any other method of synthesizing the tabular metal particles than the above, a seed crystal may be fixed on the surface a transparent substrate such as film, glass or the like, and then tabular metal particles (for example, Ag) may be crystal-like grown thereon.

In the heat ray shielding material of the invention, the tabular metal particles may be further processed so as to be given desired characteristics. Not specifically defined, the additional treatment may be suitably selected in accordance with the intended object thereof. For example, there are mentioned formation of a high-refractivity shell layer, addition of various additives such as dispersant, antioxidant, etc.

### - 1-2-10-1. Formation of High-Refractivity Shell Layer -

The tabular metal particles may be coated with a high-refractivity material having a high visible light transparency for the purpose of further increasing the visible light transparency thereof.

Not specifically defined, the high-refractivity material may be suitably selected in accordance with the object thereof. For example, there are mentioned TiOₓ, BaTiO₃, ZnO, SnO₂, ZrO₂, NbOₓ, etc.

Not specifically defined, the coating method may be suitably selected in accordance with the intended object thereof. For example, employable here is a method of hydrolyzing tetrabutoxytitanium to form a TiOₓ layer on the surface of the tabular metal particles of silver, as so reported by Langmuir, 2000, Vol. 16, pp. 2731-2735.

In case where a high-refractivity metal oxide layer shell is difficult to form directly on the tabular metal particles, another method may be employable here, in which the tabular metal particles have been synthesized in the manner as mentioned above, then a shell layer of SiO₂ or a polymer is suitably formed thereon, and further the above-mentioned metal oxide layer is formed on the shell layer. In case where TiOₓ is used as a material of the high-refractivity metal oxide layer, TiOₓ having a photocatalyst activity may deteriorate the matrix in which the tabular metal particles are to be dispersed, and in such a case, therefore, an SiO₂ layer may be optionally formed in accordance with the intended object thereof, after the TiOₓ layer has been formed on the tabular metal particles.

### - 1-2-10-2. Addition of Various Additives -

In case where the metal particles-containing layer contains a polymer and the main polymer of the polymer is a polyester resin in the heat ray shielding material of the invention, it is desirable to add a crosslinking agent to the material from the viewpoint of the film strength. The crosslinking agent is not specifically defined, for which there are mentioned epoxy-type, isocyanate-type, melamine-type, carbodiimide-type, oxazoline-type and other crosslinking agents. Of those, preferred are carbodiimide-type and oxazoline-type crosslinking agents. Specific examples of the carbodiimide-type crosslinking agent include, for example, Carbodilite V-02-L2 (by Nisshin Boseki), etc. Preferably, the material contains the crosslinking agent-derived component in an amount of from 1 to 20% by mass of the total binder in the metal particles-containing layer, more preferably in an amount of from 2 to 20% by mass.

In case where the metal particles-containing layer contains a polymer in the heat ray shielding material of the invention, it is desirable to add a surfactant to the material from the viewpoint of preventing the occurrence of cissing to form a layer having a good surface profile. As the surfactant, usable here is any known surfactant such as anionic and nonionic surfactants, etc. Specific examples of the surfactant for use herein include, for example, Lupizol A-90 (by NOF), Naroacty HN-100 (by Sanyo Chemical), etc. Preferably, the surfactant content is from 0.05 to 10% by mass of all the binder in the metal particles-containing layer, more preferably from 0.1 to 5% by mass.

The tabular metal particles may have, as adsorbed thereon, an antioxidant such as mercaptotetrazole, ascorbic acid or the like for the purpose of preventing the metal such as silver constituting the tabular metal particles from being oxidized. In addition, also for preventing oxidation, an oxidation sacrifice layer of Ni or the like may be formed on the surface of the tabular metal particles. For shielding them from oxygen, the particles may be coated with a metal oxide film of SiO₂ or the like.

For imparting dispersibility to the tabular metal particles, for example, a low-molecular-weight dispersant, a high-molecular-weight dispersant or the like that contains at least any of N element, S element and P element, such as quaternary ammonium salts, amines or the like may be added to the tabular metal particles.

### <2. Other Layers>

### <<2-1. Adhesive Layer>

Preferably, the heat ray shielding material of the invention has an adhesive layer. The adhesive layer may contain a UV absorbent.

Not specifically defined, the material usable for forming the adhesive layer may be suitably selected in accordance with the intended object thereof. For example, there are mentioned polyvinyl butyral (PVB) resin, acrylic resin, styrene/acrylic resin, urethane resin, polyester resin, silicone resin, etc. One or more of these may be used here either singly or as combined. The adhesive layer comprising the material may be formed by coating.

Further, an antistatic agent, a lubricant agent, an antiblocking agent or the like may be added to the adhesive layer.

Preferably, the thickness of the adhesive layer is from 0.1 µm to 10 µm.

### <<2-2. Substrate>>

Preferably, the heat ray shielding material of the invention has a substrate on the side thereof opposite to the side of the surface of the metal particles-containing layer therein in which at least 80% by number of hexagonal to circular, tabular metal particles are located eccentrically.

Not specifically defined, the substrate may be any optically transparent substrate, and may be suitably selected in accordance with the intended object thereof. For example, there are mentioned one having a visible light transmittance of at least 70%, preferably at least 80%, and one having a high near-IR transmittance.

The substrate is not specifically defined in point of the shape, structure, size, material and others thereof, and may be suitably selected in accordance with the intended object thereof. The shape may be tabular or the like; the structure may be a single-layer structure or a laminate layer structure; and the size may be suitably selected in accordance with the size of the heat ray shielding material.

Not specifically defined, the material of the substrate may be suitably selected in accordance with the intended object thereof. For example, there are mentioned films formed of a polyolefin resin such as polyethylene, polypropylene, poly-4-methylpentene-1, polybutene-1, etc.; a polyester resin such as polyethylene terephthalate, polyethylene naphthalate, etc.; a polycarbonate resin, a polyvinyl chloride resin, a polyphenylene sulfide resin, a polyether sulfone resin, a polyethylene sulfide resin, a polyphenylene ether resin, a styrene resin, an acrylic resin, a polyamide resin, a polyimide resin, a cellulose resin such as cellulose acetate, etc.; as well as laminate films formed of such films. Of those, especially preferred is a polyethylene terephthalate film.

Not specifically defined, the thickness of the substrate film may be suitably selected in accordance with the intended use object of the solar shielding film. In general, the thickness maybe from 10 µm to 500 µm or so, preferably from 12 µm to 300 µm, more preferably from 16 µm to 125 µm.

### <<2-3. Hard Coat Layer>>

For imparting scratch resistance thereto, preferably, the functional film has a hard coat layer that has a function of hard coatability. The hard coat layer may contain metal oxide particles.

Not specifically defined, the hard coat layer may be suitably selected in point of the type thereof and the formation method for the layer, in accordance with the intended object thereof. For example, there are mentioned thermosetting or thermocurable resins such as acrylic resin, silicone resin, melamine resin, urethane resin, alkyd resin, fluororesin, etc. Not specifically defined, the thickness of the hard coat layer may be suitably selected in accordance with the intended object thereof. Preferably, the thickness is from 1 µm to 50 µm. Further forming an antireflection layer and/or an antiglare layer on the hard coat layer is preferred, since a functional film having an antireflection property and/or an antiglare property in addition to scratch resistance may be obtained. The hard coat layer may contain the above-mentioned metal oxide particles.

### <<2-4. Overcoat Layer>>

The heat ray shielding material of the invention may have an overcoat layer that is kept in direct contact with the surface of the metal particles-containing layers on which the hexagonal to circular, tabular metal particles are kept exposed out, for the purpose of preventing oxidation and sulfurization of the tabular metal particles therein through mass transfer and for the purpose of imparting scratch resistance to the material. The material may have an overcoat layer between the metal particles-containing layer and the UV absorbent layer to be mentioned hereinunder. Especially in case where the tabular metal particles are eccentrically located in the surface of the metal particles-containing layer in the heat ray shielding material of the invention, the material may have such an overcoat layer for the purpose of preventing the tabular metal particles from peeling away in the production step to cause contamination, and for the purpose of preventing the configuration of the tabular metal particles being disordered in forming any other layer on the metal particles-containing layer.

The overcoat layer may contain a UV absorbent.

Not specifically defined, the overcoat layer may be suitably selected in accordance with the intended object thereof. For example, the layer contains a binder, a mat agent and a surfactant and may optionally contain any other component.

Not specifically defined, the binder may be suitably selected in accordance with the intended object thereof. For example, there are mentioned thermosetting or thermocurable resins such as acrylic resin, silicone resin, melamine resin, urethane resin, alkyd resin, fluororesin, etc.

The thickness of the overcoat layer is preferably from 0.01 µm to 1,000 µm, more preferably from 0.02 µm to 500 µm, even more preferably from 0.1 to 10 µm, still more preferably from 0.2 to 5 µm.

### <<2-5. UV Absorbent>>

Preferably, the heat ray shielding material of the invention has a layer containing a UV absorbent.

The layer containing a UV absorbent may be suitably selected in accordance with the intended object thereof, and may be an adhesive layer, or a layer between the adhesive layer and the metal particles-containing layer (for example, an overcoat layer or the like). In any case, it is desirable that the UV absorbent is added to the layer to be arranged on the side to be exposed to sunlight relative to the metal particles-containing layer.

Not specifically defined, the UV absorbent may be suitably selected in accordance with the intended object thereof. For example, there are mentioned benzophenone-type UV absorbent, benzotriazole-type UV absorbent, triazine-type UV absorbent, salicylate-type UV absorbent, cyanoacrylate-type UV absorbent, etc. One alone or two or more different types of these may be used here either singly or as combined.

Not specifically defined, the benzophenone-type UV absorbent may be suitably selected in accordance with the intended object thereof. For example, there are mentioned 2,4-dihydroxy-4-methoxy-5-sulfobenzophenone, etc.

Not specifically defined, the benzotriazole-type UV absorbent may be suitably selected in accordance with the intended object thereof. For example, there are mentioned 2-(5-chloro-2H-benzotriazol-2-yl)-4-methyl-6-tert-butylphenol (Tinuvin 326), 2-(2-hydroxy-5-methylphenyl)benzotriazole, 2-(2-hydroxy-5-tertiary butylphenyl)benzotriazole, 2-(2-hydroxy-3,5-di-tertiary butylphenyl)-5-chlorobenzotriazole, etc.

Not specifically defined, the triazine-type UV absorbent may be suitably selected in accordance with the intended object thereof. For example, there are mentioned mono(hydroxyphenyl)triazine compounds, bis(hydroxyphenyl)triazine compounds, tris(hydroxyphenyl)triazine compounds, etc.

The mono(hydroxyphenyl)triazine compound includes, for example, 2-[4-[(2-hydroxy-3-dodecyloxypropyl)oxy]-2-hydroxyphenyl]-4,6-bis(2,4-dimethylphenyl)-1,3,5-triazine, 2-[4-[(2-hydroxy-3-tridecyloxypropyl)oxyl-2-hydroxyphenyl]-4,6-bis(2,4-dimethylphenyl)-1,3,5-triazine, 2-(2,4-dihydroxyphenyl)-4,6-bis(2,4-dimethylphenyl)-1,3,5-triazine, 2-(2-hydroxy-4-isooctyloxyphenyl9-4,6-bis(2,4-dimethylphenyl)-1,3,5-triazine, 2-(2-hydroxy-4-dodecyloxyphenyl)-4,6-bis(2,4-dimethylphenyl)-1,3,5-triazine, etc. The bis(hydroxyphenyl)triazine compound includes, for example, 2,4-bis(2-hydroxy-4-propyloxyphenyl)-6-(2,4-dimethylphenyl)-1,3,5-triazine, 2,4-bis(2-hydroxy-3-methyl-4-propyloxyphenyl)-6-(4-methylphenyl)-1,3,5-triazine, 2,4-bis(2-hydroxy-3-methyl-4-hexyloxyphenyl)-6-(2,4-dimethylphenyl)-1,3,5-triazine, 2-phenyl-4,6-bis[2-hydroxy-4-[3-(methoxyheptaethoxy)-2-hydroxypropyloxy]phenyl]-1,3,5-triazine, etc. The tris(hydroxyphenyl)triazine compound includes, for example, 2,4-bis(2-hydroxy-4-butoxyphenyl)-6-(2,4-dibutoxyphenyl)-1,3,5-triazine, 2,4,6-tris(2-hydroxy-4-octyloxyphenyl)-1,3,5-triazine, 2,4,6-tris[2-hydroxy-4-(3-butoxy-2-hydroxypropyloxy)phenyl]-1,3,5-triazine, 2,4-bis[2-hydroxy-4-[1-(isooctyloxycarbonyl)ethoxy]phenyl]-6-(2,4-dihydroxyphenyl)-1,3,5-triazine, 2,4,6-tris[2-hydroxy-4-[1-(isooctyloxycarbonyl)ethoxy]phenyl]-1,3,5-triazine, 2,4-bis[2-hydroxy-4-[1-(isooctyloxycarbonyl)ethoxy]phenyl]-6-[2,4-bis[1-(isooctyloxycarbonyl)ethoxy]phenyl-1,3,5-triazine, etc.

Not specifically defined, the salicylate-type UV absorbent may be suitably selected in accordance with the intended object thereof. For example, there are mentioned phenyl salicylate, p-tert-butylphenyl salicylate, p-octylphenyl salicylate, 2-ethylhexyl salicylate, etc.

Not specifically defined, the cyanoacrylate-type UV absorbent may be suitably selected in accordance with the intended object thereof. For example, there are mentioned 2-ethylhexyl-2-cyano-3,3-diphenyl acrylate, ethyl-2-cyano-3,3-diphenyl acrylate, etc.

Not specifically defined, the binder may be suitably selected in accordance with the intended object thereof, but is preferably one having high visible light transparency and solar transparency. For example, there are mentioned acrylic resin, polyvinyl butyral, polyvinyl alcohol, etc. When the binder absorbs heat rays, then the reflection effect of the tabular metal particles may be thereby weakened, and therefore, it is desirable that, for the UV absorbent layer to be formed between a heat ray source and the tabular metal particles, a material not having an absorption in the region of from 450 nm to 1,500 nm is selected and the thickness of the UV absorbent layer is reduced.

The thickness of the UV absorbent layer is preferably from 0.01 µm to 1,000 µm, more preferably from 0.02 µm to 500 µm. When the thickness is less than 0.01 µm, then the UV absorption would be poor; and when more than 1,000 µm, then the visible light transmittance may lower.

The content of the UV absorbent layer varies, depending on the UV absorbent layer to be used, and therefore could not be indiscriminately defined. Preferably, the content is suitably so defined as to give a desired UV transmittance to the heat ray shielding material of the invention.

The UV transmittance is preferably at most 5%, more preferably at most 2%. When the UV transmittance is more than 5%, then the color of the tabular metal particles-containing layer would be changed by the UV ray of sunlight.

### <<2-6. Metal Oxide Particles>>

For absorbing long-wave IR rays and from the viewpoint of the balance between the heat ray shieldability and the production balance thereof, the heat ray shielding material of the invention optionally contains at least one type of metal oxide particles. In this case, for example, it is desirable that the hard coat layer 5 contains metal oxide particles. The hard coat layer 5 maybe laminated on the metal particles-containing layer 2 via the substrate 1. In case where the heat ray shielding material of the invention is so configured that the metal particles-containing layer 2 could be on the side to receive heat rays such as solar light, the metal particles-containing layer 2 could reflect a part (or optionally all) of the heat rays given thereto may be reflected and the hard coat layer 5 could absorb a part of the heat rays, and as a result, the heat quantity as a total of the heat quantity which the heat ray shielding material directly receives inside it owing to the heat rays not absorbed by the metal oxide particles-containing layer but having run into the heat ray shielding material and the heat quantity absorbed by the metal oxide particles-containing layer of the heat ray shielding material and indirectly transferred to the inside of the heat ray shielding material could be thereby reduced.

Not specifically defined, the material for the metal oxide particles may be suitably selected in accordance with the intended object thereof. For example, there are mentioned tin-doped indium oxide (hereinafter abbreviated as "ITO"), tin-doped antimony oxide (hereinafter abbreviated as "ATO"), zinc oxide, titanium oxide, indium oxide, tin oxide, antimony oxide, glass ceramics, etc. Of those, more preferred are ITO, ATO and zinc oxide as having an excellent heat ray absorbability and capable of producing a heat ray shielding material having a broad-range heat ray absorbability when combined with the tabular metal particles. Especially preferred is ITO as capable of blocking at least 90% of IR rays of 1,200 nm or longer and having a visible light transmittance of at least 90%.

Preferably, the volume-average particle diameter of the primary particles of the metal oxide particles is at most 0.1 1 µm in order not to lower the visible light transmittance of the particles.

Not specifically defined, the shape of the metal oxide particles may be suitably selected in accordance with the intended object thereof. For example, the particles may be spherical, needle-like, tabular or the like ones.

Not specifically defined, the content of the metal oxide particles in the metal oxide particles-containing layer may be suitably selected in accordance with the intended object thereof. For example, the content is preferably from 0.1 g/m² to 20 g/m², more preferably from 0.5 g/m² to 10 g/m², even more preferably from 1.0 g/m² to 4.0 g/m².

When the content is less than 0.1 g/m², then the amount of sunshine which could be felt on skin may increase; and when more than 20 g/m², then the visible light transmittance of the layer may worsen. On the other hand, when the content is from 1.0 g/m² to 4.0 g/m², it is advantageous since the above two problems could be overcome.

The content of the metal oxide particles in the metal oxide particles-containing layer may be determined, for example, as follows: The TEM image of an ultra-thin section of the heat ray shielding layer and the SEM image of the surface thereof are observed, the number of the metal oxide particles in a given area and the mean particle diameter thereof are measured, and the mass (g) calculated on the basis of the number and the mean particle diameter thereof and the specific gravity of the metal oxide particles is divided by the given area (m²) to give the content. In a different way, the metal oxide fine particles in a given area of the metal oxide particles-containing layer are dissolved out in methanol, and the mass (g) of the metal oxide particles is measured through fluorescent X-ray determination, and is divided by the given area (m²) to give the content.

### <3. Method for Producing Heat Ray Shielding Material>

Not specifically defined, the method for producing the heat ray shielding material of the invention may be suitably selected in accordance with the intended object thereof. For example, there is mentioned a coating method of forming the above-mentioned metal particles-containing layer, the above-mentioned UV absorbent layer and optionally other layers on the surface of the above-mentioned substrate.

### - 3-1. Method for Forming Metal Particles-Containing Layer -

Not specifically defined, the method for forming the metal particles-containing layer in the invention may be suitably selected in accordance with the intended object thereof. For example, there are mentioned a method of applying a dispersion containing the above-mentioned tabular metal particles onto the surface of the under layer such as the above-mentioned substrate by coating with a dip coater, a die coater, a slit coater, a bar coater, a gravure coater or the like, and a method of plane orientation according to an LB membrane method, a self-assembly method, a spray coating method or the like. In producing the heat ray shielding material of the invention, a composition of the metal particles-containing layer as shown in Examples to be given hereinunder is prepared, and then a latex or the like is added thereto in order that at least 80% by number of the above-mentioned hexagonal to circular, tabular metal particles could exist in the range of from the surface of the metal particles-containing layer to d/2 thereof. Preferably, at least 80% by number of the above-mentioned hexagonal to circular, tabular metal particles exist in the range of from the surface of the metal particles-containing layer to d/3 thereof. The amount of the latex to be added is not specifically defined. For example, the latex is preferably added in an amount of from 1 to 10000% by mass relative to the tabular metal particles.

If desired, the plane orientation of the tabular metal particles may be promoted by pressing with a pressure roller, such as a calender roller, a lamination roller or the like after the coating.

### - 3-2. Method for Forming Overcoat Layer -

Preferably, the overcoat layer is formed by coating. The coating method is not specifically defined, for which is employable any known method. For example, there is mentioned a method of coating with a dispersion that contains the above-mentioned UV absorbent by the use of a dip coater, a die coater, a slit coater, a bar coater, a gravure coater or the like.

### - 3-3. Method for Forming Hard Coat Layer -

Preferably, the hard coat layer is formed by coating. The coating method is not specifically defined, for which is employable any known method. For example, there is mentioned a method of coating with a dispersion that contains the above-mentioned UV absorbent by the use of a dip coater, a die coater, a slit coater, a bar coater, a gravure coater or the like.

### - 3-4. Method for Forming Adhesive Layer -

Preferably, the adhesive layer is formed by coating. For example, the adhesive layer may be laminated on the surface of the under layer such as the above-mentioned substrate, the above-mentioned metal particles-containing layer, the above-mentioned UV absorbent layer or the like. The coating method is not specifically defined, for which is employable any known method.

### - 4. Characteristics of Heat Ray Shielding Material of the Invention -

Preferably, the maximum value of the solar reflectance of the heat ray shielding material of the invention is in a range of from 600 nm to 2,000 nm, (more preferably from 800 nm to 1,800 nm) for increasing the heat ray reflectance of the material. In practical use, the maximum heat ray reflectance is desired to be at least 30%, and preferably at least 50%, and the visible light transmittance is desired to be at least 70% and preferably at least 75%.

Preferably, the visible light transmittance of the heat ray shielding material of the invention is at least 60%, more preferably at least 70%. When the visible light transmittance is less than 60%, then the material may cause a trouble in seeing outside objects when used for glass for automobiles or for glass for buildings.

Preferably, the UV transmittance of the heat ray shielding material of the invention is at most 5%, more preferably at most 2%. When the UV transmittance is more than 5%, then the color of the tabular metal particles-containing layer would be changed by the UV ray of sunlight.

Preferably, the haze of the heat ray shielding material of the invention is at most 20%. When the haze is more than 20%, then it would be unfavorable for safety since the material may cause a trouble in seeing outside objects when used, for example, for glass for automobiles or for glass for buildings.

### [Use Mode of Heat Ray Shielding Material and Laminate Structure]

### - Dry Lamination with Adhesive Layer -

In case where the heat ray shielding material film of the invention is used for imparting functionality to existing windowpanes or the like, the film may be stuck to the indoor side of the windowpanes by laminating thereon via an adhesive. In such a case, it is desirable that the reflection layer is made to face as much as possible the sunlight side because the heat generation could be prevented, and therefore it is suitable that an adhesive layer is laminated on the silver nanodisc particles-containing layer and the material is stuck to a windowpane via the adhesive layer.

In laminating the adhesive layer onto the surface of the silver nanodisc layer, an adhesive-containing liquid may be directly applied onto the surface thereof; however, various additives contained in the adhesive as well as the plasticizer and the solvent used may disturb the alignment of the silver nanodisc layer or may deteriorate the silver nanodiscs themselves. To minimize such troubles, it would be effective to employ dry lamination in which an adhesive is previously applied onto a release film and dried thereon to prepare an adhesive film, and the adhesive surface of the resulting film is laminated to the surface of the silver nanodisc layer of the film of the invention.

### [Laminate Structure]

There can be produced a laminate structure by laminating the heat ray shielding material of the invention with any of glass or plastic.

Not specifically defined, the production method may be suitably selected in accordance with the intended object thereof. There is mentioned a method of sticking the heat ray shielding material as produced in the manner as above to glass or plastic for vehicles such as automobiles or the like, or to glass or plastic for buildings.

The heat ray shielding material of the invention may be used in any mode of selectively reflecting or absorbing heat rays (near IR rays), and not specifically defined, the mode of using the material may be suitably selected in accordance with the intended object thereof. For example, there are mentioned a film or a laminate structure for vehicles, a film or a laminate structure for buildings, a film for agricultural use, etc. Of those, preferred are a film or a laminate structure for vehicles and a film or a laminate structure for buildings, from the viewpoint of the energy-saving effect thereof.

In the invention, the heat rays (near-IR rays) mean near-IR rays (from 780 nm to 1,800 nm) that are contained in a ratio of about 50% in sunlight.

### Examples

The characteristics of the invention are described more concretely with reference to Examples given below.

In the following Examples, the material used, its amount and ratio, the details of the treatment and the treatment process may be suitably modified or changed not overstepping the scope of the invention. Accordingly, the scope of the invention should not be limitatively interpreted by the Examples mentioned below.

### [Comparative Example 1]

### - Synthesis of Tabular Metal Particles -

2.5 mL of an aqueous 0.5 g/L polystyrenesulfonic acid solution was added to 50 mL of an aqueous 2.5 mM sodium citrate solution, and heated up to 35°C. 3 mL of an aqueous 10 mM sodium borohydride solution was added to the above solution, and with stirring, 50 mL of an aqueous 0.5 mM silver nitrate solution was added thereto at a rate of 20 mL/min. The resulting solution was stirred for 30 minutes to prepare a seed solution.

87.1 mL of ion-exchanged water was added to 132.7 mL of an aqueous 2.5 mM sodium citrate solution in a reactor, and heated up to 35°C. 2 mL of an aqueous 10 mM ascorbic acid solution was added to the solution in the reactor, 21.1 mL of the seed solution was added thereto, and with stirring, 79.6 mL of an aqueous 0.5 mM silver nitrate solution was added thereto at a rate of 10 mL/min. After this was stirred for 30 minutes, 71.1 mL of an aqueous 0.35 M potassium hydroquinonesulfonate solution was added to the reactor, and 200 g of an aqueous 7 mass% gelatin solution was added to the reactor. A white precipitate mixture liquid prepared by mixing 107 mL of an aqueous 0.25 M sodium sulfite solution and 107 mL of an aqueous 0.47 M silver nitrate solution was added to the solution in the reactor. Immediately after the addition of the white precipitate mixture liquid, 72 mL of an aqueous 0.83 M NaOH solution was added to the reactor. In this stage, the addition speed of the aqueous NaOH solution was so controlled that the pH of the system could not be over 10. This was stirred for 300 minutes to give a dispersion of tabular silver particles.

The characteristics of the metal particles in the thus-obtained, tabular silver particles dispersion were evaluated according to the methods mentioned below. It was confirmed that in the tabular silver particles dispersion, hexagonal tabular particles of silver (hereinafter referred to as hexagonal tabular silver particles) having a mean circle-equivalent diameter of 300 nm were formed. The thickness of the hexagonal tabular particles was measured and was 19 nm on average. It was known that tabular particles having an aspect ratio of 15.8 were formed.

### - Evaluation of Metal Particles -

### (Proportion of Tabular Particles, Mean Particle Diameter (mean circle-equivalent diameter), Coefficient of Variation)

The shape uniformity of the tabular Ag particles was confirmed as follows: The observed SEM image was analyzed for the shape of 200 particles extracted arbitrarily thereon. Of those particles, hexagonal to circular tabular metal particles were referred to as A, and atypical particles such as tears-like ones or other polygonal particles less than hexagonal ones were referred to as B. The proportion of the particles A (% by number) was calculated by image analysis. The obtained results are shown in Table 1 below.

Similarly, the particle diameter of each of those 100 particles A was measured with a digital caliper, and the data were averaged to give a mean value, which is the mean particle diameter (mean circle-equivalent diameter) of the tabular particles A. The standard deviation of the particle diameter distribution was divided by the mean particle diameter (mean circle-equivalent diameter) to give the coefficient (%) of variation of the mean circle-equivalent diameter (particle size distribution) of the tabular particles A. The obtained results are shown in Table 1 below.

### (Mean Particle Thickness)

The dispersion containing the formed tabular metal particles was dropped onto a glass substrate and dried thereon, and the thickness of one tabular metal particle A was measured with an atomic force microscope (AFM) (Nanocutell, by Seiko Instruments). The condition in measurement with AFM was as follows: Using an autodetection sensor in a DFM mode, the measurement range was 5 µm, the scanning speed was 180 seconds/1 frame, and the data score was 256 x 256. The mean value of the obtained data is the mean particle thickness of the tabular particles A. The obtained results are shown in Table 1 below.

In addition, from the mean particle diameter (mean circle-equivalent diameter) and the mean particle thickness of the tabular metal particles A thus obtained here, the aspect ratio of the tabular particles A was calculated by dividing the mean particle diameter (mean circle-equivalent diameter) by the mean particle thickness.

### - Formation of Metal Particles-Containing Layer -

500 mL of the tabular silver particles dispersion was centrifuged in a centrifuge (Kokusan's H-200N, Amble Rotor BN) at 7,000 rpm for 30 minutes to precipitate the hexagonal tabular silver particles. After the centrifugation, 450 ml of the supernatant was removed, 200 mL of pure water was added to the residue so as to redisperse the precipitated, hexagonal tabular silver particles, thereby preparing a tabular silver dispersion.

Further, the following compounds were added to prepare a coating liquid.

| | |
|---|---|
| Tabular silver dispersion | 250 ml (4.2 g as silver) |
| Polyester resin binder: Plascoat Z-687 (by Goo Chemical) | 100 g |
| Carbodiimide-type Crosslinking Agent: Carbodilite V-02-L2(by Nisshinbo Holdings) | 8.8 g |
| Surfactant A: Lupizol A-90 (by NOF) | 0.14 g |
| Surfactant B: Naroacty HN-100 (by Sanyo Chemical) | 0.18 g |
| Compound 1 mentioned below | 0.18 g |

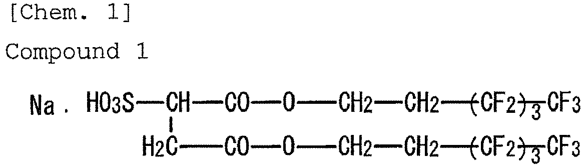

Using a wire coating bar No. 14 (by R.D.S. Webster N.Y.), the coating liquid was applied onto a PET film (Cosmoshine A4300, by Toyobo, thickness: 75 µm), and dried to give a film with the hexagonal tabular silver particles fixed thereon.

As in the above, a heat ray shielding material of Comparative Example 1 was produced.

### (Thickness of Tabular Particles-Existing Region)

In the thus-obtained heat ray shielding material of Comparative Example 1, the thickness of the tabular particles-existing region was measured according to the method mentioned below. The obtained results are shown in Table 1 below.

After the coated sample was buried in an epoxy resin, this was cut with a microtome to give an ultra-thin section, which was then subjected to STEM observation using Hitachi Technologies' S-5500 Model FE-SEM.

### (Total Thickness of Coating Layer)

The total thickness of the coating layer (mean thickness of the dried, metal particles-containing layer) in the obtained, heat ray shielding material of Comparative Example 1 was determined as follows: Using a laser microscope (VK-8510, by Keyence), the thickness of the PET film not coated with the coating liquid, and the thickness of the PET film after coated with the coating liquid, heated, dried and solidified were measured. The difference between the thickness of the uncoated film and the thickness of the coated film was calculated. The data at 10 points of one sample were averaged to give the total thickness of the coating layer. The obtained results are shown in Table 1 below.

### [Comparative Examples 2 to 4]

The amount of Plascoat Z687 in the coating liquid in Comparative Example 1 was varied to produce heat ray shielding material samples of Comparative Examples 2 to 4 shown in Table 1.

### [Comparative Example 5 and Examples 1 to 3]

Heat ray shielding material samples of Comparative Example 5 and Examples 1 to 3 were produced in the same manner as in Comparative Example 1, except that the amount of the seed solution added in Comparative Example 1 was changed to 53 mL, that 72 mL of an aqueous 0.12 M NaOH solution was added to the reactor in place of 72 mL of the aqueous 0.83 M NaOH solution after the addition of the white precipitate mixture liquid, and that the amount of Plascoat Z687 to be added was so changed that the thickness of the coating layer could be as in Table 1.

### [Comparative Example 6 and Examples 4 to 7]

Heat ray shielding material samples of Comparative Example 6 and Examples 4 to 7 were produced in the same manner as in Comparative Example 1, except that 132.7 mL of the aqueous 2.5 mM sodium citrate solution and ion-exchanged water were not added, that the amount of the seed solution to be added was changed to 350 mL, that 72 mL of the aqueous 0.83 M NaOH solution was not added to the reactor after the addition of the white precipitate mixture liquid, and that the amount of Plascoat Z687 to be added was so changed that the thickness of the coating layer could be as in Table 1.

### [Evaluation]

### - Evaluation of Optical Performance (maximum heat ray reflectance and visible light transmittance) -

The maximum heat ray reflectance was determined as follows: The heat ray reflectance of each sample was measured and calculated according to the method described in JIS-R3106:1998 "Test Method for Transmittance, Reflectance, Emittance, Solar Acquisition Rate"; and the maximum value in the range of from 300 nm to 2100 nm, as corrected by the spectral intensity of the direct solar radiation at each wavelength, is referred to as the maximum heat ray reflectance.

The visible light transmittance at each wavelength, as measured in a wavelength range of from 380 nm to 780 nm, was corrected by the spectral luminosity factor at the wavelength to be the visible light transmittance of the analyzed sample. The obtained results are shown in Table 1 below.

### - Evaluation of Surface Profile -

On the surface of the heat ray shielding material sample obtained in Examples and Comparative Examples, the number of the point defects having a size (diameter) of 0.1 mm or more was counted to provide the value per m² as the index of the surface profile. The obtained results are shown in Table 1 below.

The number per m² of the point defects having a size (diameter) of 0.1 mm or more is required to be at most 2.0 point defects/m² for practical use, and is more preferably at most 1 point defect/m².

### - Evaluation of Rubbing Resistance -

A cardboard piece of 1 cm² was fixed on the rubbing tip of a rubbing tester. In a smooth-surface dish, the heat ray shielding material sample obtained in Examples and Comparative Examples was clipped at the top and the bottom thereof. At room temperature of 25°C, a load of 300 g was applied to the cardboard piece and the sample was rubbed with the rubbing tip while the rubbing frequency was varied in the test. The rubbing condition was as follows:
Rubbing distance (one way): 5 cm
Rubbing speed: about 0.5 back-and-forth/second

After rubbed, the sample was observed. The rubbing resistance of the sample was evaluated by the rubbing frequency that had caused film peeling, as follows:
D: Film peeled in 0 to 3 back-and-forth rubbings.
C: Film peeled in 3 to 10 back-and-forth rubbings.
B: Film peeled in 10 to 30 back-and-forth rubbings.
A: Film did not peel after 30 back-and-forth rubbings.

The obtained results are shown in Table 1 below.

**Table 1**

| | Constitution of Metal Particles-Containing Layer | | | | | | | Evaluation of Heat Ray Shielding Material | | | |
|---|---|---|---|---|---|---|---|---|---|---|---|
| | Shape of Hexagonal to Circular, Tabular Metal Particles A | Proportion of Particles A to All Metal particles (% by number) | Mean Circe-Equivalent Diameter of Particles A (nm) | Coefficient of Variation of Mean Circe-Equivalent Diameter of Particles A (%) | Mean Particle Thickness of Particles A (nm) | Thickness of Particles A-Existing Region (nm) | Total Thickness of Coating Layer(nm) | Maximum Heat Ray Reflectance (%) | Visible Light Transmittance (%) | Surface Profile (number of point defects/m²) | Evaluation of Rubbing Resistance |
| Comparative Example 1 | hexagonal | 78 | 300 | 38 | 19 | 48 | 150 | 59 | 70 | 4.3 | A |
| Comparative Example 2 | hexagonal | 78 | 300 | 38 | 19 | 40 | 80 | 60 | 70.5 | 2.5 | A |
| Comparative Example 3 | hexagonal | 78 | 300 | 38 | 19 | 32 | 38 | 63 | 72 | 1.8 | D |
| Comparative Example 4 | hexagonal | 78 | 300 | 38 | 19' | 28 | 28 | 63 | 73 | 1.5 | D |
| Comparative Example 5 | hexagonal | 86 | 220 | 30 | 14 | 35 | 110 | 66 | 71.5 | 3.5 | A |
| Example 1 | hexagonal | 86 | 220 | 30 | 14 | 26 | 80 | 69 | 72 | 1 | A |
| Example 2 | hexagonal | 86 | 220 | 30 | 14 | 20 | 38 | 71 | 75 | 0.6 | B |
| Example 3 | hexagonal | 86 | 220 | 30 | 14 | 18 | 28 | 73 | 76 | none | C |
| Comparative Example 6 | hexagonal | 92 | 110 | 24 | 7 | 30 | 110 | 70 | 74 | 3.2 | A |
| Example 4 | hexagonal | 92 | 110 | 24 | 7 | 18 | 80 | 73 | 76 | 0.5 | A |
| Example 5 | hexagonal | 92 | 110 | 24 | 7 | 12 | 38 | 76 | 78 | none | A |
| Example 6 | hexagonal | 92 | 110 | 24 | 7 | 12 | 28 | 77 | 80 | none | B |
| Example 7 | hexagonal | 92 | 110 | 24 | 7 | 12 | 14 | 77 | 81 | none | B |

As shown in the above Table 1, it has been found that, when ultra-thin tabular silver particles having a mean circle-equivalent diameter of at most 14 nm are used as in the invention and when a thin metal particles-containing layer falling within the range defined in the invention is formed by coating, then the material can satisfy both good optical characteristics and good surface profile and at the same time can have improved rubbing resistance. Though the mechanism of eccentrically locating tabular metal particles in the surface is not as yet sufficiently clarified, it is considered to be important that the metal particles must indispensably be floated in the liquid surface in coating and drying and that the surface tension balance that would vary in drying would have to be kept well.

On the other hand, from Comparative Examples 1 to 4, it has been known that, when the mean particle thickness of the tabular particles is more than the upper limit defined in the invention, but even though the total thickness of the coating layer of the metal particles-containing layer is reduced, the surface profile could be gradually improved; however, when the surface profile could reach the level acceptable for practical use, then the rubbing resistance worsens, or that is, both the surface profile and the rubbing resistance could not be satisfied at the same time in that case. From Comparative Examples 5 and 6, it has been known that, when the total thickness of the coating layer is more than the upper limit defined in the invention, then the surface profile worsens even though the mean particle thickness of the tabular particles is reduced, or that is, both the surface profile and the rubbing resistance could not be satisfied at the same time in that case.

On the other hand, the heat ray shielding material obtained in Examples and Comparative Examples was buried in an epoxy resin and frozen with liquid nitrogen. This was cut with a razor in the vertical direction to prepare a vertical cross-sectional sample of the material. The vertical cross-sectional sample was observed with a scanning electron microscope (SEM), and 100 tabular metal particles in the view field were analyzed in point of the tilt angle thereof to the horizontal plane of the substrate (corresponding to ±θ in Fig. 5A). The found data were averaged to give a mean value of the tilt angle. As a result, it was confirmed that, in every heat ray shielding material, the particle tile angle was within ±30°.

### [Example 11]

### - Preparation of Coating Liquid 2 for UV Absorbent Layer -

A coating liquid 2 for UV absorbent layer, having the composition shown below, was prepared.
Composition of Coating Liquid 2 for UV Absorbent Layer:

| | |
|---|---|
| UV absorbent: Tinuvin 326 (by Ciba Japan) | 10 parts by mass |
| Binder: 10 mass% polyvinyl alcohol solution | 10 parts by mass |
| Water | 30 parts by mass |

These were mixed and controlled to have a volume-average particle diameter of 0.6 µm, using a ball mill.

### - Formation of UV Absorbent Layer -

The coating liquid 2 for UV absorbent layer was applied onto the metal particles-containing layer of the heat ray shielding material of Example 1, using a wire bar, in such a manner that the mean dry thickness of the coating layer could be 0.5 µm. Subsequently, this was heated at 100°C for 2 minutes, dried and solidified to form a UV absorbent layer that serves also as an overcoat layer.

The laminate of substrate/metal particles-containing layer that contains tabular metal particles/UV absorbent layer serving also as overcoat layer, as laminated in that order, is the heat ray shielding film here.

### - Formation of Adhesive Layer -

The surface of the thus-obtained, heat ray shielding film was washed, and an adhesive layer was stuck thereto. As the adhesive layer (adhesive agent), used was Sanritz's PET-W. The release film was peeled from one side of PET-W, and the adhesive film was then stuck to the UV absorbent layer surface of the heat ray shielding film.

According to the above process, there was produced a heat ray shielding material of Example 11, comprising substrate/metal particles-containing layer that contains tabular metal particles/UV absorbent layer serving also as overcoat layer/adhesive layer, as laminated in that order.

Thus obtained, the heat ray shielding material of Example 11 was also investigated for the characteristics thereof in the same manner as in Example 1, and had the same tendency as in Example 1.

### Industrial Applicability

The heat ray shielding material of the invention has high visible light transmittance and high solar reflectance, has excellent heat shieldability and has high rubbing resistance, and therefore the alignment of the tabular metal particles therein can be kept good. Accordingly, the heat ray shielding material can be favorably utilized as various members that are required to prevent heat ray transmission, for example, for films and laminate structures for vehicles such as automobiles, buses, etc.; films and laminate structures for buildings, etc.

### Reference Signs List

- 1: Substrate
- 2: Metal Particles-Containing Layer
- 2a: Surface of Metal Particles-Containing Layer
- 3: Tabular Metal Particles
- 4: Overcoat Layer (preferably containing UV absorbent)
- 10: Heat Ray Shielding Material
- 11: Adhesive Layer
- D: Diameter
- L: Thickness
- F(λ): Thickness of Particles-Existing Region

## Claims

1. A heat ray shielding material having a metal particles-containing layer that contains at least one type of metal particles, in which the thickness of the metal particles-containing layer is from 10 nm to 80 nm, the metal particles contain tabular metal particles having a hexagonal to circular form in a ratio of at least 60% by number relative to the total number of the metal particles, and the mean thickness of the hexagonal to circular, tabular metal particles is at most 14 nm.

2. The heat ray shielding material according to Claim 1, wherein the coefficient of variation of the mean circle-equivalent diameter of the hexagonal to circular, tabular metal particles is at most 30%.

3. The heat ray shielding material according to Claim 1 or 2, wherein the mean circle-equivalent diameter of the hexagonal to circular, tabular metal particles is from 70 nm to 500 nm and the aspect ratio of the hexagonal to circular, tabular metal particles:
mean particle diameter/mean particle thickness is from 6 to 40.

4. The heat ray shielding material according to any one of Claims 1 to 3, wherein the hexagonal to circular, tabular metal particles contain at least silver.

5. The heat ray shielding material according to any one of Claims 1 to 4, wherein the main plane of the hexagonal to circular, tabular metal particles is plane-oriented in a range of from 0° to ±30° on average relative to one surface of the metal particles-containing layer.

6. The heat ray shielding material according to any one of Claims 1 to 5, wherein the metal particles-containing layer contains a polymer.

7. The heat ray shielding material according to Claim 6, wherein the main polymer of the polymer contained in the metal-containing layer is a polyester resin.

8. The heat ray shielding material according to any one of Claims 1 to 7, which has a layer containing a UV absorbent.

9. The heat ray shielding material according to Claim 8, having an adhesive layer, in which the adhesive layer or the layer between the adhesive layer and the metal particles-containing layer contains the UV absorbent.

10. The heat ray shielding material according to any one of Claims 1 to 9, which has a visible light transmittance of at least 70%.

11. The heat ray shielding material according to any one of Claims 1 to 10, which reflects IR rays.
